# EUROPEAN PATENT SPECIFICATION

(11) **EP 3 725 493 B1**
(45) Date of publication and mention of the grant of the patent: **21.02.2024**
(21) Application number: 20169926.1
(22) Date of filing: 16.04.2020
(51) Int. Cl.: B29C 53/06, B32B 37/18, B29C 63/00, B29C 63/02, B29C 63/04

(54) **METHOD FOR FORMING A COMPOSITE ELEMENT PREFERABLY FOR FURNITURE OR BUILDING, AND COMPOSITE ELEMENT SO OBTAINABLE**
VERFAHREN ZUR HERSTELLUNG EINES VERBUNDELEMENTS, VORZUGSWEISE FÜR MÖBEL ODER GEBÄUDE, UND SO ERHÄLTLICHES VERBUNDELEMENT
PROCÉDÉ DE FORMATION D'UN ÉLÉMENT COMPOSITE, DE PRÉFÉRENCE POUR LE MOBILIER OU LE BÂTIMENT ET ÉLÉMENT COMPOSITE AINSI OBTENU

(30) Priority: 17.04.2019 IT 201900005950; 14.10.2019 IT 201900018686
(43) Date of publication of application: 21.10.2020
(73) Proprietor: Unionprofili S.r.l., 33080 Prata di Pordenone PN (IT)
(72) Inventor: BIASUZZI, Sante, 33080 Prata di Pordenone (IT); BIASUZZI, Filippo, 33080 Prata di Pordenone (IT)
(74) Representative: Gonella, Mario

(56) References cited:
- EP-A2- 0 875 361
- WO-A1-2010/049418
- WO-A1-2015/087150
- GB-A- 2 540 793

## Description

### TECHNICAL FIELD OF THE INVENTION

The present invention relates to a method for forming a composite element used for manufacturing structures or components preferably for the furnishing or construction industry. Specifically, the present invention relates to a method for manufacturing composite elements, which is simpler and more effective as compared to the conventional methods. Furthermore, the present invention relates to a composite element obtainable by means of such a method.

### STATE OF THE PRIOR ART

Known in the state of the art are elements used for manufacturing structures or components, preferably for the furnishing or construction industry, such as for example door and window jambs, cover strips, skirting boards, frames, furniture tops or doors, bed frame elements, containers and the like. Generally, the elements are made of woodbased materials, such as for example natural wood or the like.

When manufacturing the elements, there arises the need to provide a plurality of machining steps so as to ensure adequate structural and aesthetic characteristics at the same time. Specifically, the structural and aesthetic characteristics of the element depend on the type of material/s used for the manufacture thereof and, consequently, on the types of machining applied.

Generally, natural wood or solid wood which - once shaped with a shape adapted for application - is covered with a covering film, such as, for example, an adhesive film based on paper and/or other suitable materials is preferably used for making an element such as for example a door jamb. The covering film is flexible so as to be joined and conformed to the faces it covers and usually confers to the element a given aesthetic finish through a pattern, design, colour and the like. For example, a paper-based covering film on which is illustrated an image replicating the veins of a wooden body, therefore providing a "wood-effect" surface can be used. It is clear that this example is non-limiting and the covering film can achieve any desired aesthetic finish, such as for example a surface having a uniform colour.

However, obtaining an element whose faces do not have surface defects, thus guaranteeing aesthetic characteristics suitable for the application, requires carrying out multiple machining operations.

As a matter of fact, a natural wood generally has surface defects due, for example, to irregularities already present in the portion of wood from which it was obtained, such as knots, veining, depressions, projecting portions etc., or it has cutting irregularities produced during the shaping thereof etc. Furthermore, these surface defects are likely when the natural wood has a plurality of portions fixed to each other by means of gluing substances and/or fixing elements, generating joining lines, or surface defects, on the surface thereof.

In this state, when the flexible covering film is joined and conformed to the surface of natural wood, it copies the surface defects thereof that appear undesirably on its exposed surface and, consequently, on the visible surface of the element. These defects are undesirable, especially when the element has an aesthetic function, besides a structural function.

This drawback can be overcome by carrying out machining operations on the surface of natural wood, such as for example a step of covering defects with stucco and/or a step of fine sanding, so as to eliminate visible defects. Thus, in this state the covering film is joined and conformed to natural wood faces that are free of defects.

Although this method allows to obtain excellent results, a plurality of steps comprising the covering of multiple variously distributed defects with stucco and/or the fine sanding of the natural wood faces before joining to the flexible covering film are carried out. These are complex steps to perform, they are carried out using suitable equipment and they require time and specific skills by the operators.

Consequently, the manufacturing cost of the element increases undesirably and a consistency of the result is not guaranteed, especially when the multiple steps are carried out manually, such as for example the steps of covering the variously distributed defects with stucco. Furthermore, the sanding step requires removing and discarding large amounts of material, and this may be undesirable due to the cost of the natural wood used.

A further possible solution to these drawbacks is to provide the element with a material having surfaces which, once shaped using the known techniques and without carrying out further machining operations, do not have surface defects. As a matter of fact, it is possible to provide an element, such as a door jamb, with a plurality of portions made of artificial composite wood, such as for example panels made of fibres or wood particles bound by adhesive agent, or by a binding substance, or panels of pre-formed laminated layers joined together by means of adhesive agents. For example, a known type of artificial composite wood is MDF, i.e. a medium density fibreboard comprising wood fibres bound by adhesive agent, or by a binding substance. Specifically, the MDF artificial composite wood has smooth/regular surfaces substantially free of defects, as well as a relatively low cost as compared to natural wood.

Although MDF allows to obtain good aesthetic results when covered with the covering film, as pertains to application, it does not confer adequate structural characteristics to the element which, furthermore, is perceived by the end user as being of low quality and, therefore, suitable for low-end products on the market. Furthermore, if the element made of MDF is subjected to further machining operations after the step of covering with the film, such as for example a step of cutting a jamb element when installing it on the door space, unlike in the case of natural wood, the cutting of the MDF generates a large amount of dust that is generally unwanted at the site of installation of the element.

A further possible solution to these drawbacks is to form a composite element having a core made of a natural wood that provides adequate structural characteristics, and a shell that covers the core and which is made of an artificial composite wood having defect-free surfaces. In this state, there is no need for carrying out machining operations on the faces of the core to completely remove the defects thereof. Actually, the latter is instead covered by the shell on whose outer faces, i.e. those opposite to the core, the flexible covering film is applied. With this configuration, for example, the core is made of a desired grade natural wood, such as solid wood, and the shell is made of a plurality of panels made of artificial composite wood, such as MDF, each covering a respective face of the core.

In this state, the flexible covering film can be associated, i.e. it is joined and conformed to the surface of the MDF panels which are free of surface defects, as mentioned above. However, at the edges of the core, two MDF panels - separate and adjacent to each other - define a joining line, i.e. a defect.

Though this solution allows to obtain an element simultaneously having adequate structural and aesthetic characteristics, there arises the need to previously form plurality of MDF panels separate from each other and adapted to cover a corresponding face of the core. Therefore, with this configuration there arises the need to shape the MDF panels defining the shell beforehand with precision, consequently increasing the complexity and the number of the elements as well as the steps required for the production of the composite element, with ensuing increase in the cost of production of the element.

Furthermore, in this case, it is not easy to handle the plurality of MDF panels which were previously shaped to cover each one a respective face of the core. This drawback is particularly important when the coupling between the faces of the core and the plurality of MDF panels is carried out automatically by means of suitable equipment, which is desirable in this field to reduce the cost of manufacturing the element.

WO 2010049418 discloses a method for making a laminated board for furniture elements. Specifically, this document discloses a laminated board comprising a core element covered by a plurality of distinct panel portions, as well as a method for making the same.

A possible solution to this drawback is to form the shell in one piece. However, the materials made of artificial composite wood suitable for forming the shell, such as MDF, are typically provided as planar panels which can be arched, or bent, within a certain degree but cannot be bent in a manner corresponding to the edges between the faces of the core to be covered, since in this case they would break due to their structure, rigidity and thickness.

EP0875361 discloses a method and an apparatus for covering surface portions of items, such as edges of doors. Specifically, this document discloses a method and an apparatus for covering a core element by a covering material.

GB2540793 discloses a method for making a building panel. Specifically, this document relates to a method for making a building panel comprising a board of insulative material covered by folded sheets.

WO2015087150 discloses a method for making a honeycomb structured panel for furnishings components. Specifically, this document discloses a central body covered by an external body formed by flat elements folded along respective folding channels.

Thus, there arises the need for defining a method to be used to form a composite element capable of overcoming the drawbacks described above.

### SUMMARY OF THE INVENTION

The aim of the present invention is to define a method to be used to form a composite element comprising a core and a shell which at least partially covers two adjacent faces of the core and which is made in one piece starting from a panel. Subsequently, the outer surface of the shell can be associated with a flexible covering film.

Within the scope outlined above, an object relates to the development of a method to be used to form a composite element in which the shell is obtained by bending the panel substantially at the edges mutually connecting the two adjacent faces of the core to be covered. The method of the present invention provides for a step of forming folding channels on the panel substantially at the edges connecting the two adjacent faces of the core to be covered so as to facilitate bending of the panel. Specifically, in this state, the thickness of the panel is reduced at the folding channel so as to allow bending thereof without causing breakage.

A further object relates to the development of a method to be used to form a composite element in which the shell continuously covers the core at the edges mutually connecting two adjacent faces. In this state, it is possible to form a continuous surface of the shell which is therefore adapted to be covered by the flexible covering film also at the edges of the composite element, i.e. at the edges of the core.

A further object relates to the development of a method to be used to form a composite element in which the folding channels are formed on the outer surface of the panel. In this state, the step of shaping the folding channels can be easily integrated with further steps of movement, assembly and bending carried out using an automatic equipment. Furthermore, by forming the folding channel on the outer surface of the panel, it is possible to effectively couple the inner surface of the panel to the faces and the edge of the core it covers.

A further object relates to the development of a method to be used to form a composite element in which the cross-section of the core to be covered can have different shapes.

A further object relates to the development of a method to be used to form a composite element in which the number of steps and elements required to obtain it are minimal.

A further object relates to the development of a method to be used to form a composite element that is simple and that can be easily integrated in an automatic equipment, with evident advantages in terms of manufacturing costs.

The aim and objects outlined above, as well as other objects which will become apparent hereinafter from the description, are achieved by means of composite element, and the composite element itself as defined in the independent claims.

### BRIEF DESCRIPTION OF THE FIGURES

The further characteristics and advantages of the method of the present invention, to be used to form a composite element, will become more apparent in the following description regarding embodiments provided purely by way of non-limiting example, with reference to the following figures, wherein:
- Fig. 1 is a schematic representation of a cross-section of a first composite element obtainable by means of the method of the present invention, according to a first embodiment;
- Fig. 2 is a schematic representation of a cross-section of a second composite element obtainable by means of the method of the present invention, according to a second embodiment;
- Fig. 3 is a schematic representation of a cross-section of a third composite element obtainable by means of the method of the present invention, according to a third embodiment;
- Fig. 4 is a schematic representation of a cross-section of a fourth composite element obtainable by means of the method of the present invention, according to a fourth embodiment;
- Figs. 5, 6, 7, 8, 9, 10 and 11 are schematic representations of steps for forming the composite element of Fig. 1 by means of the method of the present invention, in the first embodiment;
- Figs. 12, 13, 14, 15, 16, 17 and 18 are schematic representations of steps for forming the composite element of Fig. 2 by means of the method of the present invention, in the second embodiment;
- Figs. 19, 20, 21, 22, 23, 24, 25 and 26 are schematic representations of steps for forming the composite element of Fig. 3 by means of the method of the present invention, in the third embodiment;
- Figs. 27, 28, 29, 30, 31, 32, 33, 34, 35 and 36 are schematic representations of steps for forming the composite element of Fig. 4 by means of the method of the present invention, in the fourth embodiment;
- Fig. 37 is a schematic representation of a cross-section of a fourth composite element obtainable by means of the method of the present invention, according to a fifth embodiment;
- Figs. 38, 39, 40, 41, 42, 43, 44 and 45 are schematic representations of steps for forming the composite element of Fig. 37 by means of the method of the present invention, in the fifth embodiment.

### DETAILED DESCRIPTION OF THE INVENTION

The present invention relates to a composite element used for manufacturing structures or components preferably for the furnishing or construction industry. Specifically, a method for forming a composite element, such as a jamb or a cover strip, which are extended bodies that at least partially define one of the side walls of a cavity in which a door is installed, will be outlined in the present description.

However, this embodiment shall not in any way be understood as limiting the field of application of the present invention and this can be applied to obtain further elements used for the creating structures or components preferably for the furnishing or construction industry, such as, for example, window jambs or cover strips, skirting boards, frames, doors or furniture tops, bed frame elements, containers and the like.

In the following description, the intersection of two faces of a body that are adjacent to each other will be defined as the "edge" of a body. Therefore, in the present description the edge defines a surface discontinuity line between two adjacent planar or curved faces, which define between them an internal angle comprised between 0 and 180 degrees, preferably between 0 and 150 degrees, even more preferably 90 degrees.

Furthermore, in the following description, a structure made of a material, or combination of materials, having a preferably rectangular shape defined by two larger flat surfaces, which are parallel to each other and separated by a thickness, will be defined as a "panel", or board. Further, the structure and material of the panel are rigid or semirigid such that the panel can be arched, or bent, within a certain degree but cannot be bent to form an edge.

Furthermore, in the following description the term "artificial composite wood", or engineered wood, will be used comprising a range of wood derived products, which are manufactured by binding or fixing fibres, particles, veneers or wooden boards to each other by means of adhesive agent, or by means of a binding substance, to form a composite material.

Furthermore, in the following description the term "natural wood", such as solid wood, will be used comprising a range of products derived from any portion of wood obtained from the trunk of a tree .

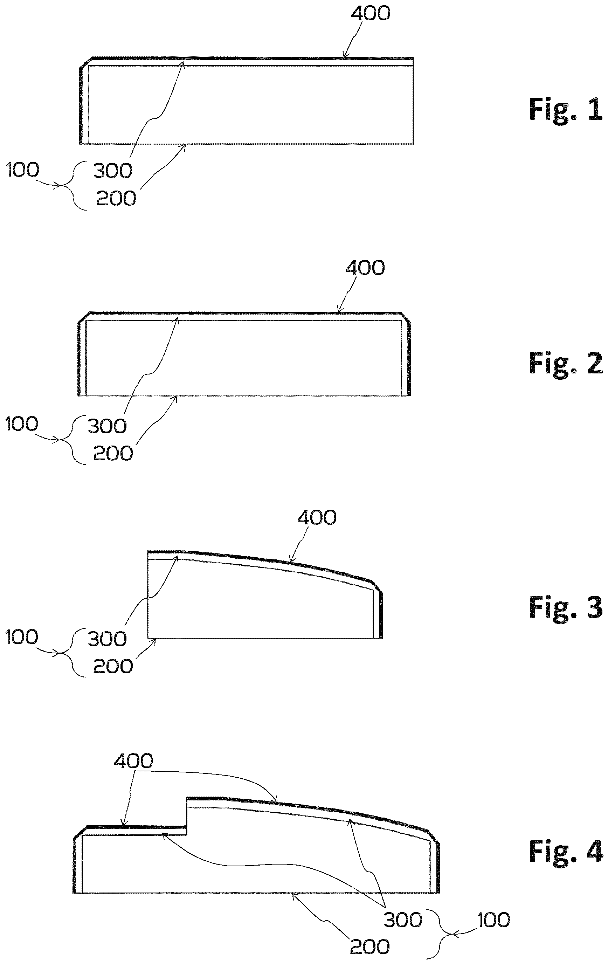

Figs. 1, 2, 3, 4 and 37 show cross-sections of composite elements 100, such as doorjambs or door cover strips, having different shapes from each other and which are formed according to the method of the present invention.

Specifically, the composite element 100 comprises a core 200 at least partially covered by a shell 300 on whose outer surface, i.e. on the surface operatively opposite to the core 200, a flexible covering film 400 can be associated.

### FIRST EMBODIMENT

In the first embodiment, with reference to Fig. 1, the core 200 is an extended body having a rectangular cross-section which is preferably made of natural wood, such as solid wood.

The shell 300 is an extended body made of a single piece which at least partially covers two adjacent faces of the core 200 and the edge which connects them. Specifically, the shell 300 has at least two adjacent portions which are made in one piece and which cover the respective said at least two faces of the core 200. Therefore, in this embodiment the shell 300 is shaped having a substantially "L"-shaped cross-section in which the two portions are arranged perpendicularly to each other. Advantageously, the shell 300 is obtained starting from a preferably planar panel, as explained below, and it is preferably made of artificial composite wood, such as MDF, which has smooth surfaces, i.e. free of defects. In the most preferred embodiment, the MDF panel has a thickness comprised between 0.5 and 3 mm, even more preferably between 0.5 and 1.5 mm.

Lastly, the flexible covering film 400 preferably covers the outer surface of the shell 300 and confers to the composite element 100 a desired characteristic, such as for example an aesthetic characteristic. In this embodiment, the flexible covering film 400 is made of adhesive paper preferably impregnated with melamine resins and it has a desired grammage, finish, tactile effect, gloss, etc. It is clear that the choice of the type of flexible covering film 400 is non-limiting while the materials and characteristics of the film can be the most suitable as a function of the application of the composite element 100.

The joining between the faces of the core 200 and the portions of the shell 300, and the joining between the outer surfaces of the shell 300 and the flexible covering film 400 are obtained by mutually fixing using gluing substances known in the state of the art.

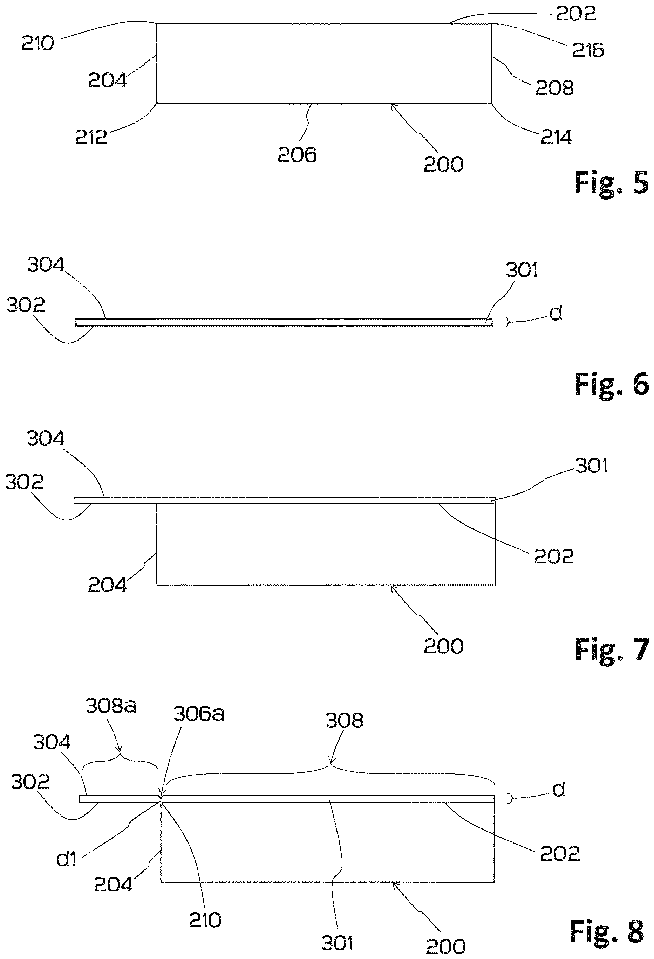

With reference to Figures 5 to 11, shown below is the method for forming the composite element 100 of Fig. 1 according to the first embodiment.

### Step a).

Firstly, with reference to Fig. 5, provided is the core 200 which is shaped with a desired shape by means of known techniques. As stated above, in this embodiment the core 200 has a rectangular cross-section and it is preferably made of natural wood. Specifically, the core 200 comprises four main faces, a first face 202, a second face 204, a third face 206, and a fourth face 208. Furthermore, the faces arranged adjacent two-by-two and connected to each other through edges, respectively a first edge 210, a second edge 212, a third edge 214 and a fourth edge 216.

### Step b)

Subsequently, with reference to Fig. 6, provided for is a panel 301 in one piece which is dimensioned to cover a given surface region of the core 200. The panel 301, preferably made of artificial composite wood such as MDF, is adapted to cover a surface region of the core 200 which comprises at least one portion of at least two adjacent faces which are connected to each other by means of a respective edge. In this embodiment, the panel 301 is adapted to cover the first face 202, the second face 204 and the first edge 210 of the core 200.

Specifically, the panel 301 is provided with a preferably planar shape defined by two larger surfaces, respectively an inner surface 302 and an outer surface 304, which are parallel to each other and separated by a thickness d of the panel 301. As explained below, the inner surface 302 - in the operative conditions - is adapted to join the core 200, while the outer surface 304 - opposite the inner surface 302 - can be associated, by joining, with the flexible covering film 400.

### Step c)

Subsequently, with reference to Fig. 7, the panel 301 is coupled to the core 200 so that the first face 202 is at least partially joined to a portion of the inner surface 302 of the panel 301, leaving free another adjacent portion adapted to be coupled to the second face 204 of the core 200, as outlined hereinafter.

The joining between the first face 202 of the core 200 and the portion of the inner surface 302 of the panel 301 is achieved by means of a suitable gluing substance chosen from among those known in the state of the art. Preferably, the gluing substance is arranged beforehand on all the faces of the core 200 adapted to be covered by the panel 301, as outlined hereinafter.

### Step d)

With reference to Fig. 8, after coupling the panel 301 and the core 200 together, a folding channel 306a is formed on the outer surface 304 of the panel 301. The folding channel 306a defines and connects together a first portion 308 and a second portion 308a, adjacent to each other, of the panel 301. Specifically, the first portion 308 is coupled and joined to the first face 202, i.e. it is operatively adapted to be joined to the first face 202 of the core 200, and the second portion 308a is operatively adapted to be joined to the second face 204 of the core 200.

The folding channel 306a is formed substantially at the first edge 210 which connects the first face 202 and the second face 204 of the core 200 together.

Furthermore, the folding channel 306a has a depth smaller than the thickness d of the panel 301 so as to leave the first portion 308 and the second portion 308a connected to each other through a reduced portion d1 of the thickness d which is substantially a weakened portion which acts as a hinge under operative conditions as explained below. In the most preferred embodiment, the reduced portion d1 has a dimension preferably measuring about half the dimension of the thickness d.

In the present embodiment, the folding channel 306a has a "V" shaped cross-section. However, the shape of the folding channel is non-limiting and it may have any suitable shape, for example a "U" shape. In the most preferred embodiment, the cross-section of the folding channel 306a has a "V" shape in which the walls of the channel define an angle within the channel comprised between 0 and 180 degrees, even more preferably 90 degrees.

### Step e)

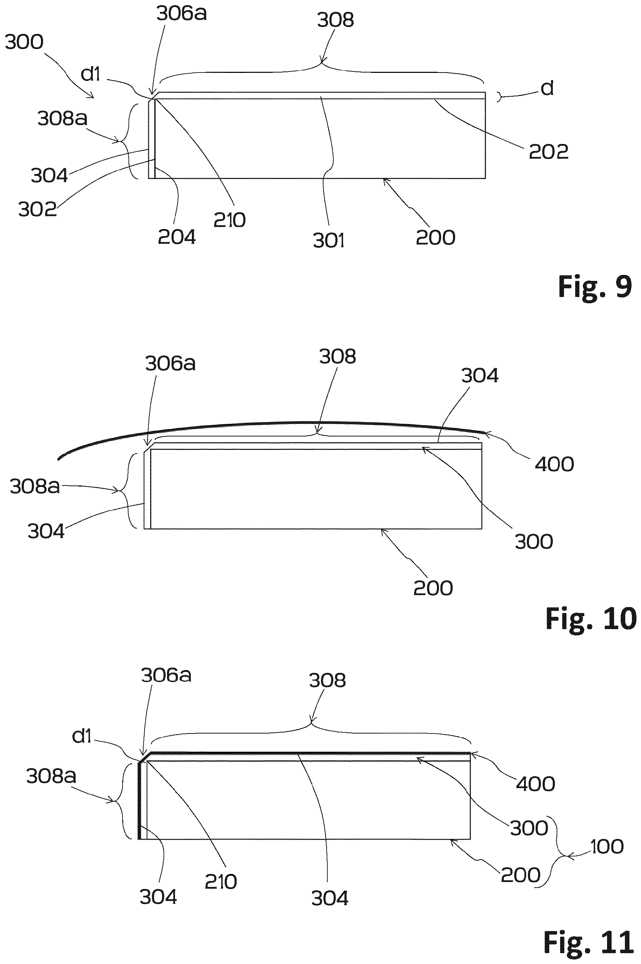

Subsequently, with reference to Fig. 9, the panel 301 is bent along the folding channel 306a so as to join the portion of the inner face 302 of the second portion 308a to the second face 204 of the core 200. In other words, the panel 301 is bent along the folding channel 306a so as to join the portion of the inner face 302 of each of the first portion 308 and the second portion 308a to the corresponding between the first face 202 and the second face 204 of the core 200.

In this state, the shell 300 which covers the core 200 of the composite element 100 is formed. Specifically, the shell 300 is made of a single piece starting from the panel 301, by bending, so as to form a shell having a substantially "L"-shaped cross-section.

Advantageously, the folding channel 306a defines the reduced portion d1 of the thickness d of the panel 301 which has an extension adapted to allow the bending thereof. Specifically, the bending is carried out, without causing the panel 301 to break, by rotating the second portion 308a with respect to the first portion 308 around an axis substantially coinciding with the folding channel 306a. In other words, the reduced portion d1 of the thickness d acts as a rotation hinge which connects the first portion 308 and the second portion 308a of the panel 301 together.

Advantageously, the depth of the folding channel 306a, i.e. the extension of the reduced portion d1 of the thickness d, is adjusted according to the material that the panel 301 is made of so as to allow its bending without causing it to break.

In the most preferred embodiment, the panel 301 is made of an artificial composite wood comprising fibres and/or wood particles bound using an adhesive agent, or using a binding substance, such as for example an MDF panel. In this state, the reduction d1 of the thickness d and the glue that binds the fibres/particles advantageously cooperate, facilitating the bending of the panel 301 by means of the deformation characteristics guaranteed by the combination of the adhesive agent with the fibres and/or wood particles. In the most preferred embodiment, the reduced portion d1 has a dimension measuring about half the thickness d, thus ensuring deformation and integrity of the panel 301 at the folding channel 306a during bending.

Without wishing to be bound by theory, an artificial composite wood comprising fibres and/or wood particles bound by an adhesive agent, such as MDF, has a greater percentage by weight of adhesive agent inside the thickness d of the panel 301 with respect to the inner 302 and outer 304 surfaces thereof, which - on the other hand - contain a higher percentage by weight of fibre or wood particles. In this state, the inner portion of the panel 301 is plastically deformed in a simpler manner than the inner surface 302 and the outer surface 304 which, being stiffer, would resist against deformation causing the panel 301 to break when folded. Therefore, by forming the folding channel 306a on the outer surface 304, or by removing the corresponding surface portion thereof, the panel 301 is prevented from breaking when the latter is folded along the folding channel 306a.

The joining between the second face 204 of the core 200 and the respective portion of the inner surface 302 of the panel 301 is achieved by means of a suitable gluing substance chosen from among those known in the state of the art. As mentioned previously, the gluing substance is preferably arranged beforehand on all the faces of the core 200 adapted to be operatively covered by the panel 301.

### Step f)

With reference to Fig. 10, after forming the shell 300 of the composite element 100, provided is the flexible covering film 400 which is dimensioned to cover at least one portion of the outer surface 304 of the first portion 308 and of the second portion 308a of the panel 301 and, furthermore, for covering the surface of the folding channel 306a.

In this embodiment, the flexible covering film 400 is made of adhesive paper preferably impregnated with melamine resins and it has a desired grammage, finish, tactile effect, gloss, etc, so as to confer a desired aesthetic characteristic to the composite element 100.

### Step g)

Subsequently, with reference to Fig. 11, the flexible covering film 400 is joined to the outer surface 304 of at least one from among the first portion 308 and the second portion 308a of the panel 301 and, furthermore, it is joined to the surface of the folding channel 306a.

In this state, the flexible covering film 400 is advantageously joined and conformed to the outer surface 304 of the shell 300, i.e. of the bent panel 301, which is free of defects. Furthermore, at the first edge 210, the panel 301 continuously covers the core 200 by means of the reduced portion d1 of the thickness d which connects the first portion 308 to the second portion 308a of the panel 301.

It is clear that the present invention can be obtained through other embodiments without departing from the scope claimed.

Described below are further embodiments of the present invention which provide for modifications relating to some steps of forming the composite element 100. Therefore, the elements and steps for forming the composite element 100 which are substantially unchanged, or which perform the same function, will not be described in detail again and the same reference numbers will be used.

### SECOND EMBODIMENT

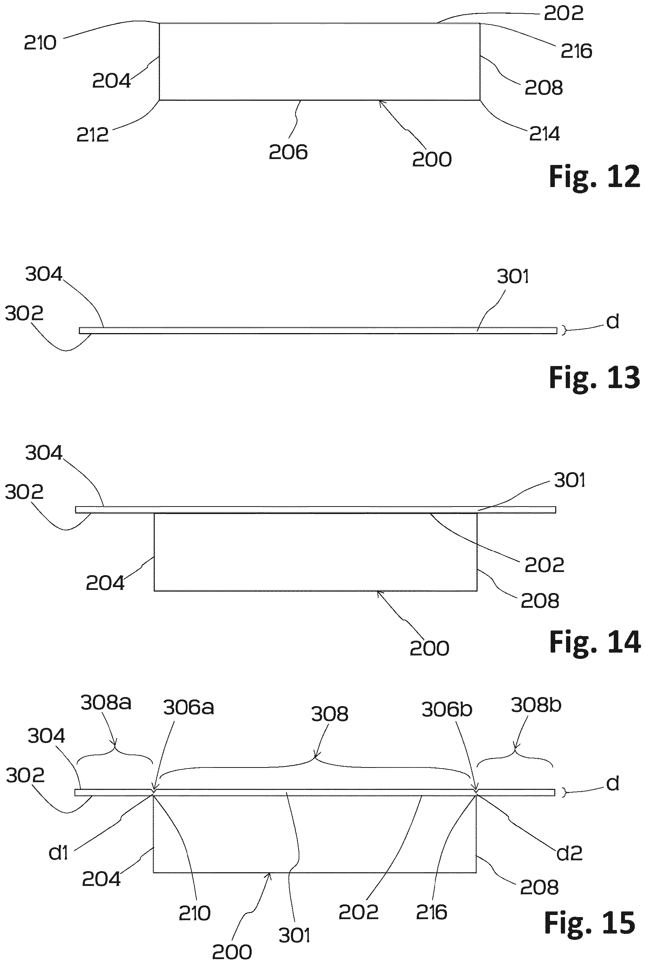

With reference to Figs. 12 to 18, shown is the method for forming the composite element 100 shown in Fig. 2.

In this embodiment, like in the first embodiment, the core 200 is an extended body having a rectangular cross-section.

The shell 300, instead, is an extended body made of a single piece which at least partially covers three adjacent faces of the core 200 and two edges which connect them. Therefore, in this embodiment the shell 300 is shaped having a substantially "U"-shaped cross-section.

Lastly, the flexible covering film 400 preferably covers the outer surface of the shell 300 and confers to the composite element 100 a desired characteristic, such as for example an aesthetic characteristic, like in the first embodiment.

With reference to Figs. 12 to 18, shown below is the method for forming the composite element 100 of Fig. 2 according to the second embodiment.

### Step a)

First of all, with reference to Fig. 12, like in the first embodiment, provided is the core 200 which is shaped having a rectangular cross-section. Specifically, the core 200 comprises four main faces, a first face 202, a second face 204, a third face 206 and a fourth face 208, which are arranged adjacent two-by-two and connected to each other through edges, respectively a first edge 210, a second edge 212, a third edge 214 and a fourth edge 216.

### Step b)

With reference to Fig. 13, like in the first embodiment, provided for is a panel 301 in one piece which is dimensioned to cover a given surface region of the core 200. In this embodiment, the panel 301 is adapted to cover the first face 202, the second face 204, the fourth face 208, the first edge 210 and the fourth edge 216 of the core 200.

Specifically, the panel 301 is provided with a preferably planar shape defined by two larger surfaces, respectively an inner surface 302 and an outer surface 304, which are parallel to each other and separated by a thickness d of the panel 301.

### Step c)

Subsequently, with reference to Fig. 14, the panel 301 is coupled to the core 200 so that the first face 202 is at least partially joined to a portion of the inner surface 302 of the panel 301, leaving free two end portions adapted to be coupled respectively to the second face 204 and to the fourth face 208 of the core 200, as outlined hereinafter.

### Step d)

With reference to Fig. 15, after coupling the panel 301 and the core 200 together, a first folding first channel 306a and a second folding channel 306b are formed on the outer surface 304 of the panel 301. The first folding channel 306a defines and connects together a first portion 308 and a second portion 308a adjacent to each other, while the second folding channel 306b defines and connects together the first portion 308 and a third portion 308b adjacent to each other.

The first folding channel 306a and the second folding channel 306b are formed substantially at the first edge 210 and the fourth edge 216, respectively, which connect the first face 202 and, respectively, the second face 204 and the fourth face 208 of the core 200 together.

Furthermore, the first folding channel 306a and the second folding channel 306b connect together the first portion 308 to the second portion 308a and to the third portion 308b by means of a reduced portion of the thickness d, respectively the first reduced portion d1 and the second reduced portion d2, which act as a hinge under operative conditions.

### Step e)

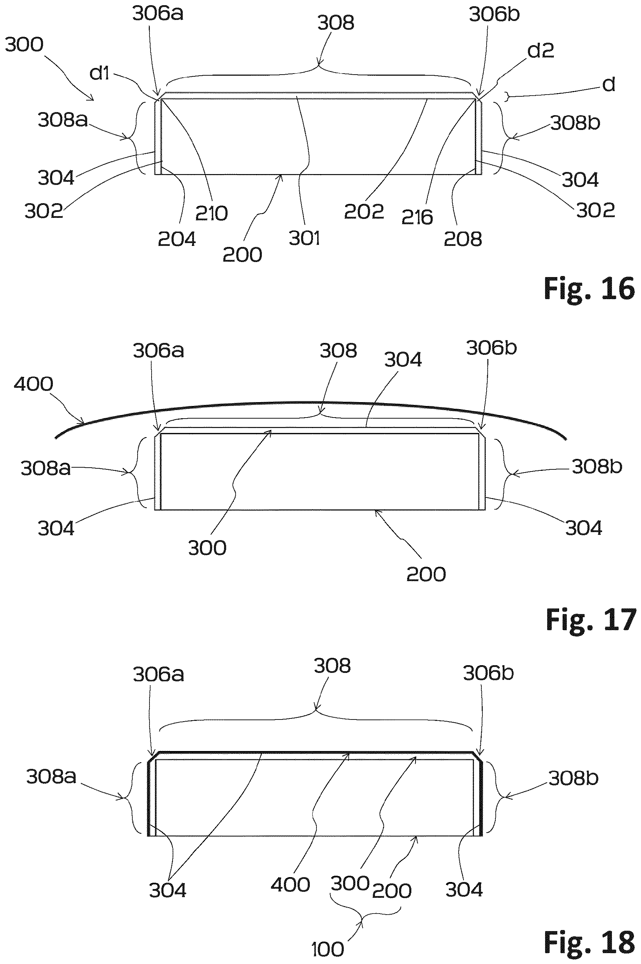

Subsequently, with reference to Fig. 16, the panel 301 is bent along the first folding channel 306a and the second folding channel 306b so as to join the portion of the inner face 302 of the second portion 308a and of the third portion 308b, respectively, to the second face 204 and to the fourth face 208 of the core 200.

In this state, the shell 300 which covers the core 200 of the composite element 100 is formed. Specifically, the shell 300 is made of a single piece starting from the panel 301, by bending, so as to form a shell having a substantially "U"-shaped cross-section.

### Step f)

With reference to Fig. 17, after forming the shell 300 of the composite element 100, provided is the flexible covering film 400 which is dimensioned to cover at least one portion of the outer surface 304 of the first portion 308, of the second portion 308a and of the third portion 308b of the panel 301 and, furthermore, for covering the surface of the first folding channel 306a and of the second folding channel 306b.

### Step g)

Subsequently, with reference to Fig. 18, the flexible covering film 400 is joined to the outer surface 304 of at least one from among the first portion 308, the second portion 308a and the third portion 308b of the panel 301 and, furthermore, it is joined to at least one of the surfaces of the first folding channel 306a and of the second folding channel 306b.

### THIRD EMBODIMENT

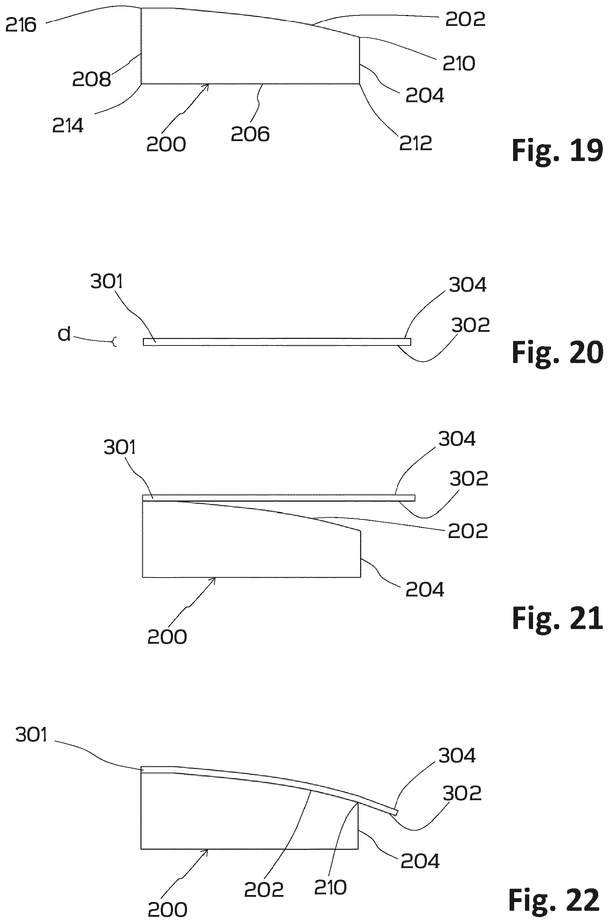

With reference to Figs. 19 to 26, shown is the method for forming the composite element 100 shown in Fig. 3.

In this embodiment, unlike the first embodiment, the core 200 is an extended body having a quadrilateral-shaped cross-section, wherein one of the faces is curved.

The shell 300, like in the first embodiment, is an extended body made of a single piece which at least partially covers two adjacent faces of the core 200 and the edge which connects them. Therefore, in this embodiment the shell 300 is shaped having a substantially "L"-shaped cross-section.

Lastly, the flexible covering film 400 preferably covers the outer surface of the shell 300 and confers to the composite element 100 a desired characteristic, such as for example an aesthetic characteristic, like in the previous embodiments.

With reference to Figs. 19 to 26, shown below is the method for forming the composite element 100 of Fig. 3 according to the third embodiment.

### Step a)

Firstly, with reference to Fig. 19, provided is the core 200 which is shaped with a desired shape by means of known techniques. As mentioned, in this embodiment the core 200 comprises four main faces, a first face 202, a second face 204, a third face 206 and a fourth face 208, which are arranged adjacent two-by-two and connected to each other through edges, respectively a first edge 210, a second edge 212, a third edge 214 and a fourth edge 216. Specifically, unlike the first embodiment, the first face 202 is not planar but is curved, that is, it defines - in cross-section - an arc with a given radius of curvature.

### Step b)

With reference to Fig. 20, like in the previous embodiments, provided for is a panel 301 in one piece which is dimensioned to cover a given surface region of the core 200. In this embodiment, the panel 301 is adapted to cover the first face 202, the second face 204 and the first edge 210 of the core 200.

Specifically, the panel 301 is provided with a preferably planar shape defined by two larger surfaces, respectively an inner surface 302 and an outer surface 304, which are parallel to each other and separated by a thickness d of the panel 301.

### Step c)

Subsequently, with reference to Fig. 21, the panel 301 is coupled to the core 200 so that the first face 202 is at least partially joined to a portion of the inner surface 302 of the panel 301, leaving free another adjacent portion adapted to be coupled to the second face 204 of the core 200, as outlined hereinafter.

### Step c')

Subsequently, with reference to Fig. 22, the panel 301 is coupled to the core 200 so that the first face 202 is preferably fully joined to a portion of the inner surface 302 of the panel 301, leaving free another adjacent portion adapted to be coupled to the second face 204 of the core 200.

Specifically, in this step the panel 301 is bent by a certain degree, without breaking it, thanks to the deformation of the material that it is made of. In other words, the panel 301 is bent, i.e. conformed to the curvature of the first face 202, by applying a pressure.

### Step d)

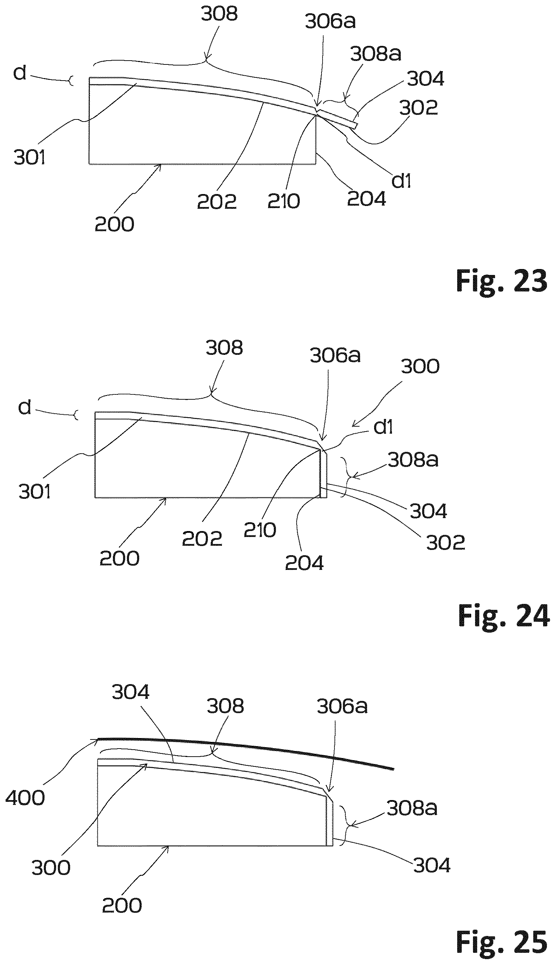

With reference to Fig. 23, after coupling the panel 301 and the core 200 together, a folding channel 306a is formed on the outer surface 304 of the panel 301. The folding channel 306a defines and connects together a first portion 308 and a second portion 308a adjacent to each other.

The first folding channel 306a is formed substantially respectively at the first edge 210 which connects the first face 202 and the second face 204 of the core 200 together.

Furthermore, the first folding channel 306a connects the first portion 308 and the second portion 308a together through a reduced portion d1 of the thickness d which acts as a hinge under operative conditions.

### Step e)

Subsequently, with reference to Fig. 24, the panel 301 is bent along the folding channel 306a so as to join the portion of the inner face 302 of the second portion 308a to the second face 204 of the core 200.

In this state, the shell 300 which covers the core 200 of the composite element 100 is formed. Specifically, the shell 300 is made of a single piece starting from the panel 301, by bending, so as to form a shell having a substantially "L"-shaped cross-section.

### Step f)

With reference to Fig. 25, after forming the shell 300 of the composite element 100, provided is a flexible covering film 400 which is dimensioned to cover at least one portion of the outer surface 304 of the first portion 308 and of the second portion 308a of the panel 301 and, furthermore, for covering the surface of the folding channel 306a.

### Step g)

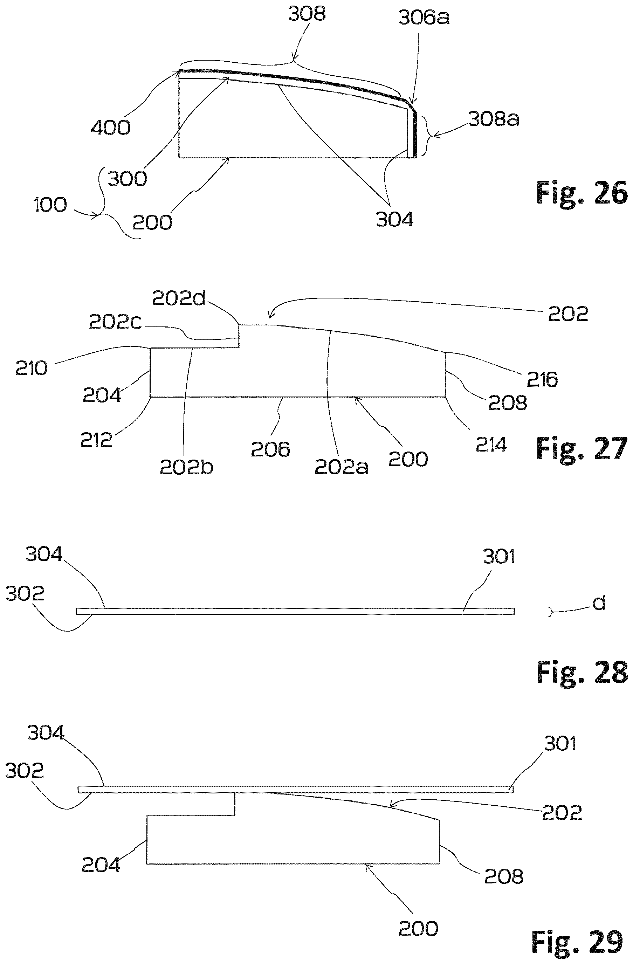

Subsequently, with reference to Fig. 26, the flexible covering film 400 is joined to the outer surface 304 of at least one from among the first portion 308 and the second portion 308a and, furthermore, it is joined to the surface of the first folding channel 306a.

### FOURTH EMBODIMENT

With reference to Figs. 27 to 36, shown is the method for forming the composite element 100 shown in Fig. 4.

In this embodiment, unlike the first embodiment, the core 200 is an extended body having a quadrilateral-shaped cross-section, wherein one of the faces has an extended recess forming a step.

The shell 300, like in the previous embodiments, is an extended body obtained starting from single piece which at least partially covers three adjacent faces of the core 200 comprising the step. As explained below, in this embodiment, the shell 300 consists of two portions, obtained from the same panel 301, each of which has a substantially "L"-shaped cross-section and which cover the two planes of the step and the respective adjacent faces.

Lastly, the flexible covering film 400 preferably covers the outer surface of the shell 300 and confers to the composite element 100 a desired characteristic, such as for example an aesthetic characteristic, like in the previous embodiments.

With reference to Figs. 27 to 36, shown below is the method for forming the composite element 100 of Fig. 4 according to the fourth embodiment.

### Step a)

Firstly, with reference to Fig. 27, provided is the core 200 which is shaped with a desired shape by means of known techniques. As mentioned, in this embodiment the core 200 comprises four main faces, a first face 202, a second face 204, a third face 206 and a fourth face 208, which are arranged adjacent two-by-two and connected to each other through edges, respectively a first edge 210, a second edge 212, a third edge 214 and a fourth edge 216. Specifically, unlike the previous embodiments, the first face 202 is not planar but it comprises a first curved portion 202a and a second step-like portion having a tread 202b, adjacent to the first edge 210, and a riser 202c wherein the curved portion 202a is connected to the tread 202c through a corner 202d of the step.

### Step b)

With reference to Fig. 28, like in the previous embodiments, provided for is a panel 301 in one piece which is dimensioned to cover a given surface region of the core 200. In this embodiment, the panel 301 is adapted to substantially cover the first face 202, the second face 204, the fourth face 208, the first edge 210 and the fourth edge 216 of the core 200.

Specifically, the panel 301 is provided with a preferably planar shape defined by two larger surfaces, respectively an inner surface 302 and an outer surface 304, which are parallel to each other and separated by a thickness d of the panel 301.

### Step c)

Subsequently, with reference to Fig. 29, the panel 301 is coupled to the core 200 so that the first face 202 is at least partially joined to a portion of the inner surface 302 of the panel 301, leaving free two end portions adapted to be coupled to the second face 204 and to the fourth face 208 of the core 200, as outlined hereinafter.

### Step c')

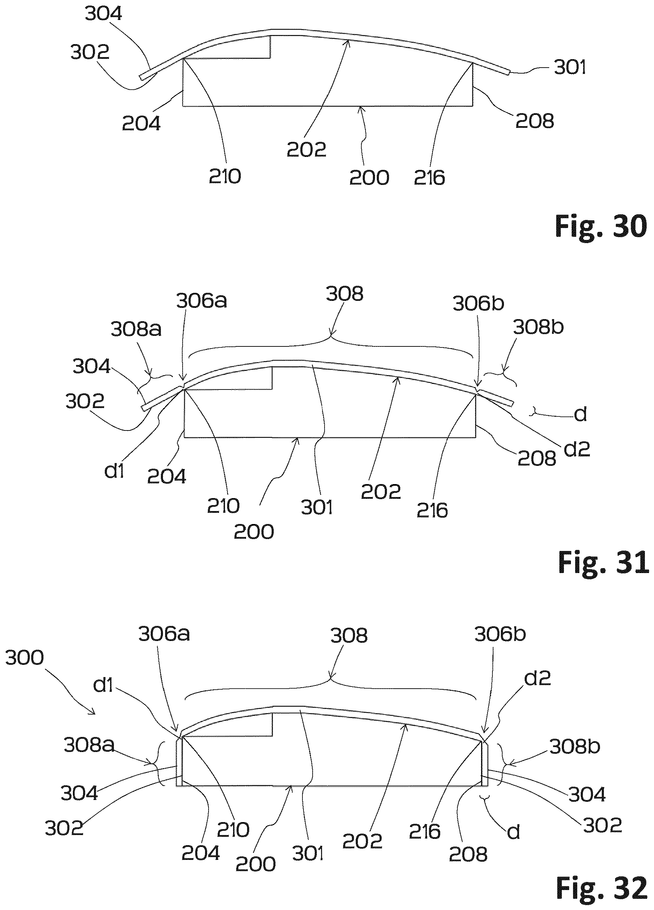

Subsequently, with reference to Fig. 30, the panel 301 is coupled to the core 200 so that the curved portion 202a of the first face 202 is preferably fully joined to a portion of the inner surface 302 of the panel 301, leaving free another adjacent portion adapted to be coupled to the fourth face 208 of the core 200.

Specifically, in this step the panel 301 is bent by a certain degree, without breaking it, thanks to the deformation of the material that it is made of. In other words, the panel 301 is bent, i.e. conformed to the curvature of the curved portion 202a of the first face 202, by applying a pressure.

Furthermore, the panel 301 is bent so as to bring it into contact with, or to approach it to, the first edge 210 of the core 200, leaving free a portion thereof adapted to be coupled to the second face 204 of the core 200.

### Step d)

With reference to Fig. 31, after coupling the panel 301 and the core 200 together, a first folding first channel 306a and a second folding channel 306b are formed on the outer surface 304 of the panel 301. The first folding channel 306a defines and connects together a first portion 308 and a second portion 308a adjacent to each other, while the second folding channel defines and connects together the first portion 308 and a third portion 308b adjacent to each other.

The first folding channel 306a and the second folding channel 306b are formed substantially at the first edge 210 and the fourth edge 216, respectively, which connect the first face 202 and, respectively, the second face 204 and the fourth face 208 of the core 200 together.

Furthermore, the first folding channel 306a and the second folding channel 306b connect together the first portion 308 and to the second 308a by means of a reduced portion of the thickness d, respectively the first reduced portion d1 and the second reduced portion d2, which act as a hinge under operative conditions.

### Step e)

Subsequently, with reference to Fig. 32, the panel 301 is bent along the first folding channel 306a and the second folding channel 306b so as to join the portion of the inner face 302 of the second portion 308a and of the third portion 308b, respectively, to the second face 204 and to the fourth face 208 of the core 200.

In this state, the shell 300 which covers the core 200 of the composite element 100 is formed. Specifically, the shell 300 is made of a single piece starting from the panel 301, by bending, so as to form a shell having a substantially "U"-shaped cross-section.

### Step e')

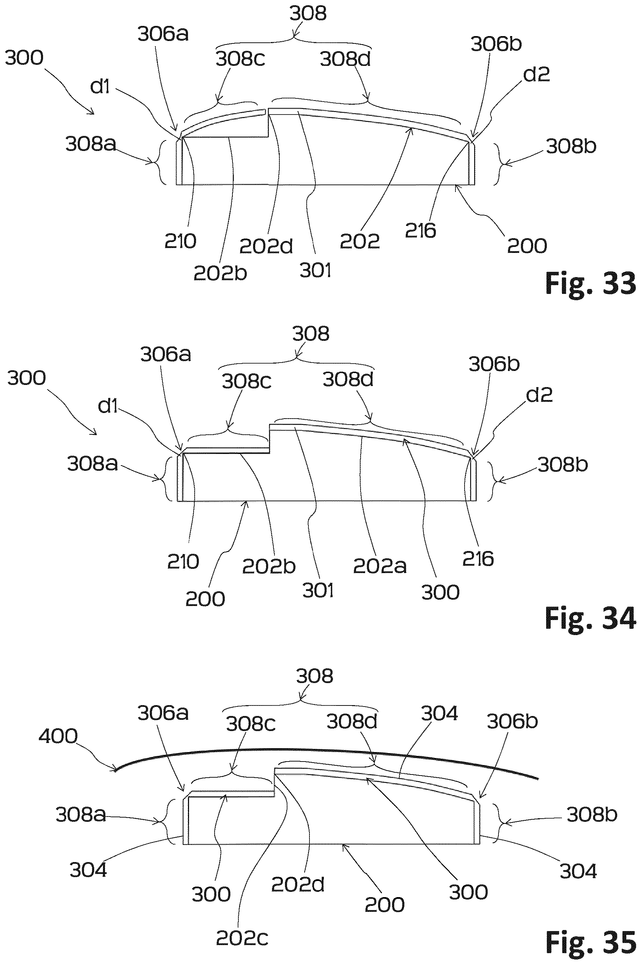

Subsequently, with reference to Fig. 33, the panel 301 is cut substantially at the corner 202d of the core 200. In this state, the first portion 308a is divided into a suspended portion 308c and an adherent portion 308d. Specifically, the adherent portion 308d is the portion which - in step c') - is adherent to, or joined to, the curved portion 202a of the first face 202, while the suspended portion 308c faces, or corresponds to, the tread 202b of the first face 202 and is spaced from the latter.

### Step e")

With reference to Fig. 34, the panel 301 is bent along the first folding channel 306a so as to join the portion of the inner face 302 of the suspended portion 308c to the tread 202b of the core 200.

It should be observed that, as previously described in step e'), in this step e") the portion of the inner face 302 of the adherent portion 308d is already joined to the curved portion 202a of the core 200.

### Step f)

With reference to Fig. 35, after forming two portions of the shell 300 of the composite element 100, provided is the flexible covering film 400 which is dimensioned to cover at least one portion of the outer surface 304 of the suspended portion 308c, of the adherent portion 308d, of the second portion 308a and of the third portion 308b of the panel 301 and, furthermore, for covering the surface of the first folding channel 306a and of the second folding channel 306b.

### Step g)

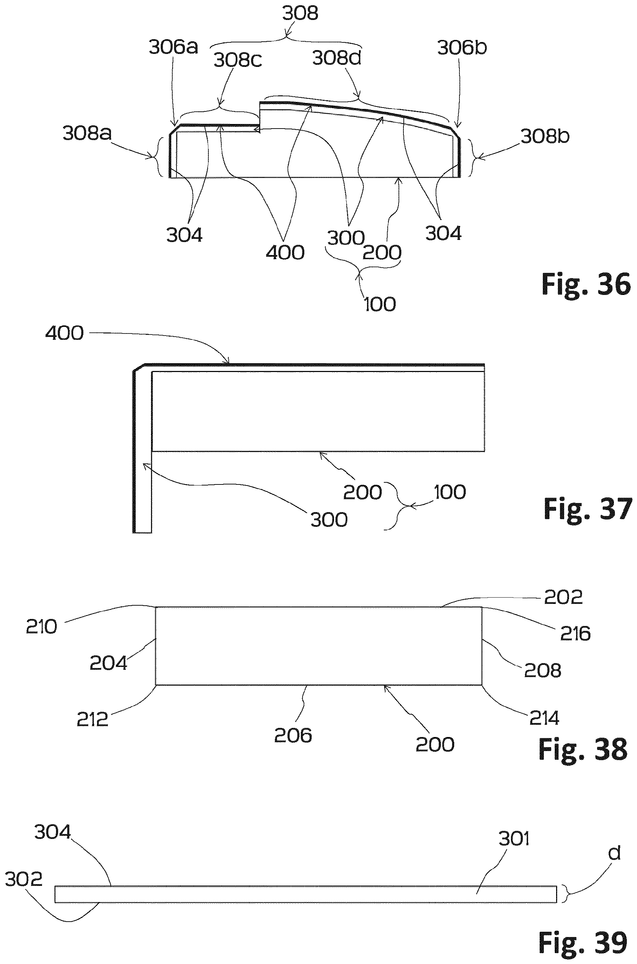

Subsequently, with reference to Fig. 36, the flexible covering film 400 is joined to the outer surface 304 of at least one from among the suspended portion 308c, the adherent portion 308d, the second portion 308a and the third portion 308b of the panel 301. Furthermore, the flexible covering film 400 is joined to at least one of the surfaces of the first folding channel 306a and the second folding channel 306b.

Specifically, still with reference to Figs. 35 and 36, the flexible covering film 400 is cut at the corner 202d. However, it is possible to provide an embodiment in which the flexible covering film 400 is not cut and it also covers the riser 202c of the step of the core 200. Furthermore, in a further embodiment, a gasket is fixed at the riser 202c; this embodiment is particularly convenient when the composite element 100 is used for providing a door jamb in which the tread 202b and the riser 202c are the surfaces of the composite element 100 adapted to receive the door when the latter is closed on the jamb.

### FIFTH EMBODIMENT

With reference to Figs. 38 to 45, shown is the method for forming the composite element 100 shown in Fig. 37.

In this embodiment, like in the first embodiment, the core 200 is an extended body having a rectangular cross-section.

The shell 300, on the other hand, is an extended body made of a single piece which at least partially covers two adjacent faces of the core 200 and the edge which connects them, wherein one of the two portions of the shell 300 extends beyond a face which it covers so as to protrude from the latter. Therefore, in this embodiment the shell 300 is shaped having a substantially "L"-shaped cross-section in which the two portions shell 300 are arranged perpendicularly to each other and one of the latter protrudes from the face of the core 200 that it covers.

Specifically, in this embodiment the protruding portion of the shell 300 has a greater thickness with respect to that of the other portion. This embodiment is particularly suitable when the shell 300 acts as a structural reinforcement element of the composite element 100 and/or the protruding part thereof is adapted to engage suitable seats, and therefore it should have a predetermined and relatively high thickness. In the preferred embodiment, the shell 300, made of artificial composite wood such as MDF, has a thickness equal to or greater than 3.0 mm at the protruding portion and a thickness smaller than or equal to 2 mm at the other portion.

Lastly, the flexible covering film 400 preferably covers the outer surface of the shell 300 and confers to the composite element 100 a desired characteristic, such as for example an aesthetic characteristic, like in the first embodiment.

With reference to Figs. 38 to 45, shown below is the method for forming the composite element 100 of Fig. 37 according to the fifth embodiment.

### Step a)

First of all, with reference to Fig. 38, like in the first embodiment, provided is the core 200 which is shaped having a rectangular cross-section. Specifically, the core 200 comprises four main faces, a first face 202, a second face 204, a third face 206 and a fourth face 208, which are arranged adjacent two-by-two and connected to each through edges, respectively a first edge 210, a second edge 212, a third edge 214 and a fourth edge 216.

### Step b)

With reference to Fig. 39, like in the first embodiment, provided for is a panel 301 in one piece which is dimensioned to cover a given surface region of the core 200. In this embodiment, the panel 301 is adapted to cover the first face 202, the first edge 210 and the second face 204 so as to extend protruding from the latter beyond the second edge 212.

Specifically, the panel 301 is provided with a preferably planar shape defined by two larger surfaces, respectively an inner surface 302 and an outer surface 304, which are parallel to each other and separated by a thickness d of the panel 301 which, in the most preferred embodiment, is equal to or greater than 3.0 mm.

### Step c)

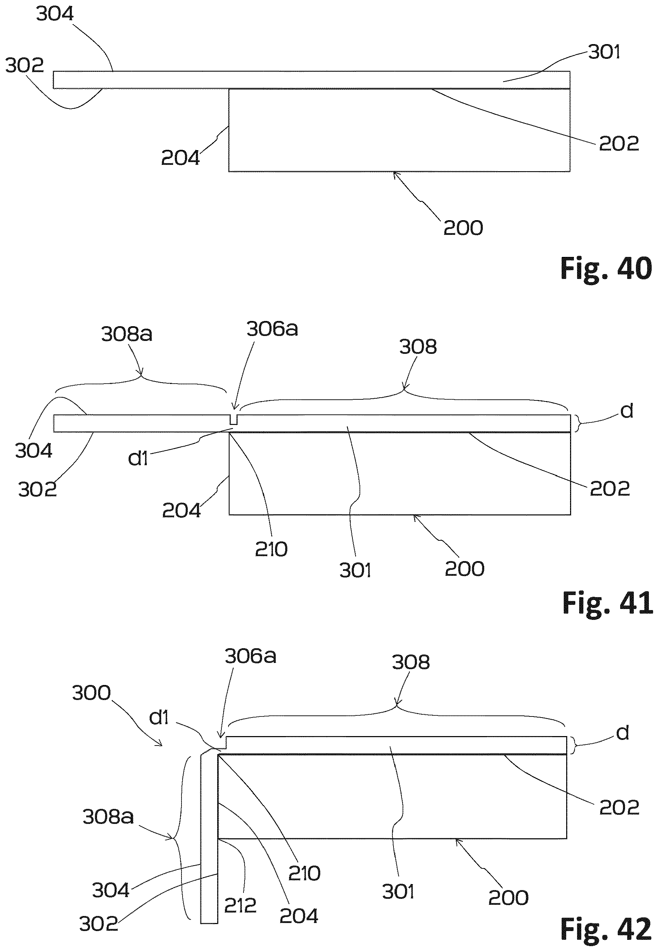

Subsequently, with reference to Fig. 40, the panel 301 is coupled to the core 200 so that the first face 202 is at least partially joined to a portion of the inner surface 302 of the panel 301, leaving free another adjacent portion adapted to be coupled to the second face 204 of the core 200, as outlined hereinafter.

### Step d)

With reference to Fig. 41, after coupling the panel 301 and the core 200 together, a folding channel 306a is formed on the outer surface 304 of the panel 301. The folding channel 306a defines and connects together a first portion 308 and a second portion 308a, adjacent to each other, of the panel 301. Specifically, the first portion 308 is coupled and joined to the first face 202, i.e. it is operatively adapted to be joined to the first face 202 of the core 200, and the second portion 308a is operatively adapted to be joined to the second face 204 of the core 200, protruding from the latter.

The folding channel 306a is formed substantially at the first edge 210 which connects the first face 202 and the second face 204 of the core 200 together.

Furthermore, the folding channel 306a connects the first portion 308 and the second portion 308a together through a reduced portion d1 of the thickness d which acts as a hinge under operative conditions.

In the preferred embodiment, the folding channel 306a is formed staggered with respect to the first edge 210 by a distance which is at most equal to the thickness d of said panel 301. Preferably, the folding channel is made staggered with respect to the first edge 210 toward the portion of the panel 301 which is joined to the first face 202 of the core 200. In this state, during the subsequent step of bending the panel 301, the integrity and adequate aesthetic characteristics of the panel 301 are ensured at the folding channel 306a, inhibiting, during the deformation of the panel 301, the formation of protruding parts consisting of the fibres/particles and adhesive agent.

Furthermore, in the most preferred embodiment, the bending channel 306a has a "U"-shaped cross-section so as to ensure - in the subsequent step of bending the panel 301 - adequate aesthetic characteristics thus inhibiting - at the folding channel 306a - the formation of protruding parts in the subsequent step of bending the panel 301; however, this shape of the folding channel is non-limiting.

### Step e)

Subsequently, with reference to Fig. 42, the panel 301 is bent along the folding channel 306a so as to join the portion of the inner face 302 of the second portion 308a to the second face 204 of the core 200.

In this state, the shell 300 which covers the core 200 of the composite element 100 is formed. Specifically, the shell 300 is made of a single piece starting from the panel 301, by bending, so as to form a shell having a substantially "L"-shaped cross-section in which the second portion 308a extends protruding from the second face 204 beyond the second edge 212.

### Step ee)

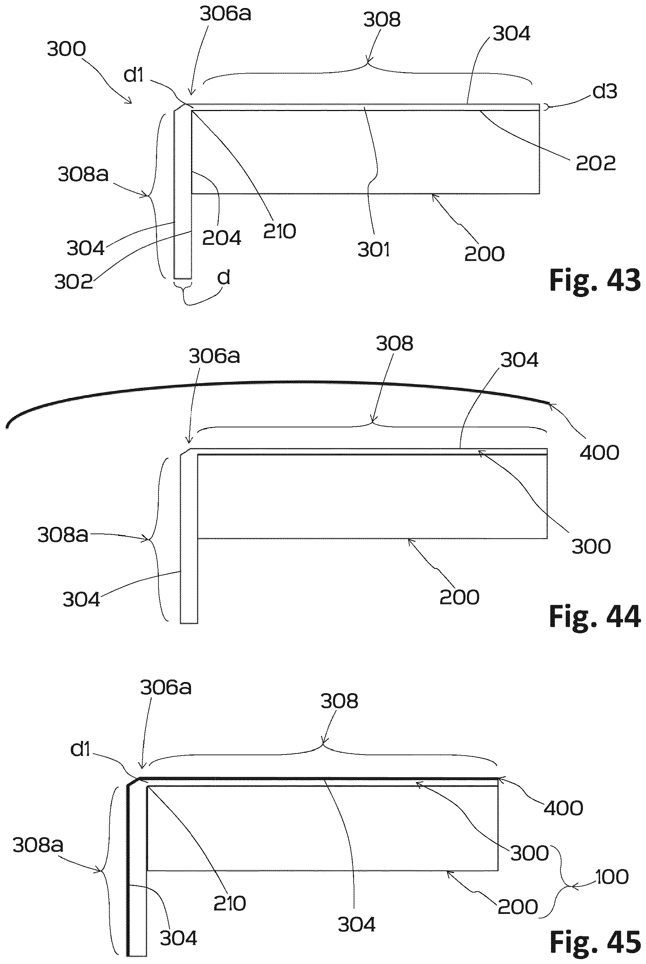

Subsequently, with reference to Fig. 43, material is removed from the outer surface 304 of the first portion 308 of the shell 300 so as to reduce the original thickness d thereof to a smaller thickness d3. Preferably, the material is removed by means of milling. However, the material removal technique is non-limiting and it may optionally be a cutting technique. Specifically, in this step the smaller thickness d3 preferably has the same thickness value as the reduced portion d1.

In this state, advantageously, adequate aesthetic characteristics of the panel 301 at the folding channel 306a are ensured by eliminating discontinuities which would represent a defect, such as a step formed due to the relatively high thickness of the panel 301.

### Step f)

With reference to Fig. 44, after forming the shell 300 of the composite element 100, provided is the flexible covering film 400 which is dimensioned to cover at least one portion of the outer surface 304 of the first portion 308 and of the second portion 308a of the panel 301 and, furthermore, for covering the surface of the first folding first channel 306a.

### Step g)

Subsequently, with reference to Fig. 45, the flexible covering film 400 is joined to the outer surface 304 of at least one from among the first portion 308 and the second portion 308a of the panel 301 and, furthermore, it is joined to the surface of the folding channel 306a.

It is clear that the present invention can be obtained through other embodiments without departing from the scope claimed.

For example, it is possible to provide for a method for forming a composite element 100 according to any of the previously described embodiments in which - after step e) and before step f) - the outer surface 304 of the shell 300, or of the bent panel 301, is chamfered at the folding channel/s 306a and/or 306b, thus making the corresponding edge of the shell 300 rounded. In this step, the reduced portion of the thickness d is maintained, or it is possibly reduced further. In this state, the flexible covering film 400 is joined to an outer surface 304 without edges which is particularly appreciated by an end user and/or which reduces the likelihood of breaking the flexible covering film 400 during the coupling thereof to the shell 300.

Furthermore, in the embodiments described above, the step d) for forming the folding channel/s on the outer surface of the panel 301 is carried out after the step c) in which the panel 301 is coupled to the core 200. However, it is possible to provide for an embodiment in which step d) is carried out before step c). In the most preferred embodiment, the step of forming the folding channel/s is advantageously carried out after the coupling between the panel 301 and the core 200, by joining, given that the coupling between the folding channel/s and the corresponding edge of the core 200 is more precise in this state, especially when the step of forming the element 100 is carried out in forming apparatus of the automatic type. On the contrary, if the step of forming the folding channel/s is carried out before the coupling between the panel 301 and the core 200, there arises the need for providing a precise automatic system for moving and coupling the latter.

Furthermore, in the fourth embodiment the composite element 100 is formed starting from a single panel 301. However, it is possible to provide for an embodiment wherein the composite element 100 is formed starting from two separate panels 301 adapted to cover two different regions of the same core 200. Specifically, it is possible to form the shell 300 on the core 200 by means of a first step corresponding to the first embodiment for covering the second face 204, the tread 202b and the first edge 210, and a second step corresponding to the third embodiment for covering the fourth face 208, the curved portion 202a and the fourth edge 216.

Furthermore, in the previously described embodiments, the shell 300 fully covers the faces of the core 200; however, it is possible to provide for an embodiment wherein the shell 300 covers only a portion of the faces of the core 200.

Furthermore, in the fifth embodiment the shell 300 has a second portion 308a which extends protruding from the second face 204 beyond the second edge 212. However, it is possible to provide for an embodiment wherein the second portion 308a does not extend protruding from the second face 204 beyond the second edge 212. In this state, it is possible to provide for different thicknesses of the shell 300 at different faces of the core 200 in order to confer suitable aesthetic or structural characteristics to the composite element 100.

Furthermore, in the previous description there is provided for - in the fifth embodiment alone - a step ee) in which material is removed from the outer surface 304 of the first portion 308 of the shell 300 so as to reduce the original thickness d thereof to a smaller thickness d3. However, such step ee) can be provided for in any of the described embodiments so as to suitably reduce the original thickness of one or more portions of the panel 301 covering the faces of the core 200.

Furthermore, in the previously described embodiments, the flexible covering film 400 substantially fully covers the outer surface 304 of the shell 300. However, it is possible to provide for an embodiment in which one or more flexible covering film/s 400 fully or partially covers/cover the outer surface 304 of the shell 300.

Furthermore, in the previously described embodiments, the flexible covering film 400 preferably confers aesthetic characteristics; however, this choice is non-limiting and the flexible covering film 400 can confer other characteristics to the composite element 100, depending on the application, such as for example an improved scratch resistance, protection against substances or atmospheric agents, acting as a layer suitable to promote the adhesion of further films or paints, etc. Optionally, the flexible covering film 400 may consist of a paint.

Furthermore, in the previously described embodiments, the composite element 100, comprising the core 200 and the shell 300, can be associated with the flexible covering film 400; however, the composite element 100, comprising the core 200 and the shell 300, may not provide for the flexible covering film 400 on the surface thereof.

Furthermore, in the previous description the core 200 is made of natural wood, such as solid wood. However, this choice of material is non-limiting and the core 200 can be made of any suitable material, such as for example a metal or a polymeric resin forming a section having a suitable cross-section and to which the shell 300 is joined.

Furthermore, in the previous description the panel 301 with which the shell 300 is formed is made of artificial composite wood, such as MDF. However, this choice of material is non-limiting and the shell 300 may be made of any suitable artificial composite wood, such as for example low density fibreboard (LDF) or high-density fibreboard (HDF), and the like. Possibly, the panel 301 may be made of rigid plastic material which would tend to break when bent at the edges of the core 200. Thus, forming the folding channel/s allows to inhibit the likelihood of the panel, made of plastic material, breaking due to the rigidity thereof which is also as a function of the thickness d of the panel that is provided.

In the light of the above, it is clear that major results are achieved, overcoming the drawbacks of the prior art, thus allowing to define a method that can be used to form a composite element 100 comprising a core 200 and a shell 300 which at least partially covers two adjacent faces of the core 200. Specifically, the shell 300 is made of a single piece starting from a panel 301 which is without surface defects and on whose surface there can be associated a flexible covering film 400.

As a matter of fact, the shell 300 is obtained by bending the panel 301 substantially at the edge which connects the two adjacent faces of the core 200 to be covered to each other. Specifically, the thickness of the panel is reduced at the folding channel 301 so as to allow bending thereof without causing breakage. Advantageously, the depth of the folding channel, i.e. the extension of the reduced corresponding portion of thickness, can be adjusted according to the material that the panel is made of so as to allow its bending without causing it to break.

In this state, the core 200 can be advantageously covered with a panel 301 without changing the structural characteristics of the latter and increasing the aesthetic characteristics thereof. In the most preferred embodiment, the panel 301 has a relatively small thickness, preferably comprised between 0.5 and 1.5 mm. In other words, forming the panel 301 with a low-grade material, such as the artificial composite wood, and the core 200 with a high-grade material, such as natural wood, or solid wood, allows to guarantee adequate structural characteristics of the composite element 100, conferred by the core 200, and adequate surface characteristics suitable for the possible covering with the flexible covering film 400, conferred by the shell 300 or by the bent panel 301.

Furthermore, the shell 300 provides for a continuous surface even at the edges of the composite element 100, thus making adapted to be possibly covered by the flexible covering film 400.

Furthermore, the step of shaping the folding channel can be easily integrated with further moving, assembly and folding steps carried out in an automatic apparatus given that the folding channel is formed on the outer surface 304 of the panel 301 which, under operative conditions in an automatic apparatus, is easily accessible by shaping means and, furthermore, the core 200 does not represent a hindrance during this shaping step.

Furthermore, forming the folding channel on the outer surface 304 of the panel 301 allows to suitably cover the inner surface 302 of the panel 301 to the faces of the core 200 to be covered, irrespectively of the inner corner between the faces. In other words, by forming a folding channel on the outer surface 304 of the panel 301, the coupling between the edge of the core 200 and the inner surface of the panel 302 guarantees the absence of vacuum regions between the core 200 and the shell 300, which could be a defect especially when the thickness of the shell 300 is preferably smaller than 2 mm.

Further, as shown in Figs. 1 to 4 and 37, the method of the present invention is suitable for covering a core 200 having a differently shaped cross-section.

Furthermore, the method of the present invention is carried out starting from a single panel 301, possibly cut during the steps of covering the core 200 as shown in step e') of Fig. 33, and the number of steps provided for is minimal. For this reason, the present method can be easily integrated in automatic apparatus for forming the composite elements 100.

Naturally, the materials and equipment used to implement the present invention, as well as the shape and dimensions of the individual components, may be the most suitable depending on the specific requirements.

## Claims

1. Method for forming a composite element (100) comprising the steps of:
a) providing a core (200) comprising a plurality of faces (202, 204, 206, 208) adjacent to each other and connected to each other through edges (210, 212, 214, 216),
b) providing a panel (301) in one piece dimensioned to cover at least a surface region of said core (200) which comprises at least a portion of at least two adjacent faces (202, 204, 206, 208) connected to each other through at least one of said edges (210, 212, 214, 216),
said panel (301) having a thickness (d), an inner surface (302) adapted to be operatively joined to said core (200) and an outer surface (304) opposite to said inner surface (302),
c) coupling said panel (301) to said core (200) so that one of said at least two faces (202, 204, 206, 208) is at least partially joined to a portion of said inner surface (302) of said panel (301),
**characterized in that**
after said step c) the method further comprises in sequence the steps of:
d) forming on said outer surface (304) of said panel (301) at least a folding channel (306a, 306b) defining and connecting to each other at least two adjacent portions (308, 308a, 308b) of said panel (301) by means of a reduced portion (d1, d2) of said thickness (d),
said at least a folding channel (306a, 306b) being further formed operatively corresponding to said at least one of said edges (210, 212, 214, 216) of said core (200),
e) folding said panel (301) along said folding channel (306a, 306b) so as to join the portion of inner surface (302) of each of said at least two portions (308, 308a, 308b) to the corresponding one of said at least two adjacent faces (202, 204, 206, 208) of said core (200).

2. The method for forming a composite element (100) according to claim 1, wherein after said step e) it comprises the step of:
ee) removing material from said outer surface (304) of at least one of said at least two portions (308, 308a, 308b) so as to reduce the thickness thereof to a reduced thickness (d3) which is smaller than said thickness (d).

3. The method for forming a composite element (100) according to claim 1 or 2, wherein after said step e) or said step ee) it comprises the steps of:
f) providing a flexible covering film (400) dimensioned to cover at least a portion of said outer surface (304) of at least one of said at least two portions (308, 308a, 308b) and said at least a folding channel (306a, 306b),
g) joining the flexible covering film (400) to the outer surface (304) of at least one of said at least two portions (308, 308a, 308b) and to said at least a folding channel (306a, 306b).

4. The method for forming a composite element (100) according to any of claims 1 to 3, wherein after said step e) or said step ee) it comprises a step of chamfering the outer surface (304) of said panel (301) at and/or near said at least a folding channel (306a, 306b).

5. The method for forming a composite element (100) according to any of claims 1 to 4, wherein when in said step c) said face (202, 204, 206, 208) which is at least partially joined to a portion of said inner surface (302) of said panel (301) it is, further, curved,
after said step c) and before said step d) said method comprises the step of: c') bending said panel (301) so as to at least partially conform it to said face (202, 204, 206, 208) to which it is joined.

6. The method for forming a composite element (100) according to any of claims 1 to 5, wherein when in said step c) said face (202, 204, 206, 208) which is at least partially joined to a portion of said inner surface (302) of said panel (301) further comprises a step defined by a tread (202b) adjacent to one of said edges (210, 212, 214, 216), a riser (202c) and a corner (202d),
after said step c) and before said step d) said method comprises the step of:
c') bending said panel (301) so as to bring it closer to said edge (210, 212, 214, 216) which is adjacent to said tread (202b), and
after said step e) it comprises the steps of:
e') cutting said panel (301) at said corner (202d) forming a suspended portion (308c) and an adherent portion (308d) of said panel (301), wherein said adherent portion (308d) is adherent to said core (200) and said suspended portion (308c) corresponds to said tread (202b) and is spaced from the latter,
e") folding said panel (301) along said folding channel (306a, 306b) which corresponds to the edge (210, 212, 214, 216) adjacent to said tread (202b) so as to join the portion of the inner surface (302) of said suspended portion (308c) to said tread (202b).

7. The method for forming a composite element (100) according to any of claims 1 to 6, wherein said panel (301) is made with artificial wood.

8. The method for forming a composite element (100) according to any of claims 1 to 7, wherein said panel (301) is made with MDF.

9. The method for forming a composite element (100) according to any of claims 1 to 8, wherein said core (200) is made with natural wood.

10. The method for forming a composite element (100) according to any of claims 1 to 9, wherein said step d) is carried out after said step b) and before said step c).

11. The method for forming a composite element (100) according to any of claims 1 to 10, wherein in said step d) said at least a folding channel (306a, 306b) is formed operatively corresponding to said at least one of said edges (210, 212, 214, 216) and staggered with respect to the latter by a distance which is at most equal to the thickness (d) of said panel (301).

12. Composite element (100) comprising:
a core (200) comprising a plurality of faces (202, 204, 206, 208) adjacent to each other and connected to each other through edges (210, 212, 214, 216),
a shell (300) arranged on said core (200) to cover at least a surface region thereof which comprises at least a portion of at least two faces (202, 204, 206, 208) adjacent and connected to each other through at least one of said edges (210, 212, 214, 216),
said shell (300) having an inner surface (302) adapted to be operatively joined to said core (200) and an outer surface (304) opposite to said inner surface (302), said inner surface (302) and said outer surface (304) being spaced from each other by a thickness (d),
said shell (300) being formed in one piece and comprising at least two portions (308, 308a, 308b) adjacent to each other and each adapted to cover a corresponding portion of said at least two adjacent faces (202, 204, 206, 208),
said shell (300) comprising at least a folding channel (306a, 306b) defining and connecting said at least two portions (308, 308a, 308b) to each other by means of a reduced portion (d1, d2) of said thickness (d) which acts as hinge,
**characterized in that**
said at least a folding channel (306a, 306b) is formed on said outer surface (304) of said shell (300) in a position operatively corresponding to said at least one of said edges (210, 212, 214, 216) of said core (200).

13. The composite element (100) according to claim 12, wherein at least one of said at least two portions (308, 308a, 308b) has a smaller thickness with respect to the thickness of the other of said at least two portions (308, 308a, 308b).

14. The composite element (100) according to claim 12 or 13, comprising a flexible covering film (400) joined to the outer surface (304) of at least one of said at least two portions (308, 308a, 308b) and to said at least a folding channel (306a, 306b).

## Patentansprüche

1. Verfahren zur Herstellung eines Verbundelements (100), das die Schritte umfasst zum:
a) Bereitstellen eines Kerns (200) mit einer Vielzahl von aneinandergrenzenden und durch Kanten (210, 212, 214, 216) miteinander verbundenen Flächen (202, 204, 206, 208),
b) Bereitstellen einer Platte (301) in einem Stück, die so dimensioniert ist, dass sie wenigstens einen Oberflächenbereich des Kerns (200) bedeckt, der wenigstens einen Teil von wenigstens zwei angrenzenden Flächen (202, 204, 206, 208) umfasst, die miteinander durch wenigstens eine der Kanten (210, 212, 214, 216) verbunden sind,
wobei die Platte (301) eine Dicke (d), eine Innenfläche (302), die angepasst ist, um mit dem Kern (200) operativ zusammengefügt zu werden, und eine der Innenfläche (302) gegenüberliegende Außenfläche (304) hat,
c) Verbinden der Platte (301) mit dem Kern (200), so dass eine der wenigstens zwei Flächen (202, 204, 206, 208) wenigstens teilweise mit einem Teil der Innenfläche (302) der Platte (301) zusammengefügt wird,
**dadurch gekennzeichnet, dass**
nach dem Schritt c) das Verfahren des Weiteren nacheinander die Schritte umfasst:
d) Ausbilden an der Außenfläche (304) der Platte (301) von wenigstens einem Faltkanal (306a, 306b), der wenigstens zwei angrenzende Teile (308, 308a, 308b) der Platte (301) mithilfe eines reduzierten Teils (d1, d2) der Dicke (d) definiert und miteinander verbindet,
wobei der wenigstens eine Faltkanal (306a, 306b) des Weiteren entsprechend wenigstens einer der Kanten (210, 212, 214, 216) des Kerns (200) operativ ausgebildet ist,
e) Falten der Platte (301) entlang des Faltkanals (306a, 306b), um so den Teil der Innenfläche (302) von jedem der wenigstens zwei Teile (308, 308a, 308b) mit der entsprechenden der wenigstens zwei angrenzenden Flächen (202, 204, 206, 208) des Kerns (200) zusammenzufügen.

2. Verfahren zur Herstellung eines Verbundelements (100) nach Anspruch 1, wobei es nach dem Schritt e) den Schritt umfasst zum:
ee) Entfernen von Material von der Außenfläche (304) von wenigstens einem der wenigstens zwei Teile (308, 308a, 308b), so dass die Dicke davon auf eine verringerte Dicke (d3) reduziert wird, die kleiner ist als die Dicke (d).

3. Verfahren zur Herstellung eines Verbundelements (100) nach Anspruch 1 oder 2, wobei es nach dem Schritt e) oder dem Schritt ee) die Schritte umfasst zum:
f) Bereitstellen einer flexiblen Abdeckfolie (400), die so dimensioniert ist, dass sie wenigstens einen Teil der Außenfläche (304) von wenigstens einem der wenigstens zwei Teile (308, 308a, 308b) und den wenigstens einen Faltkanal (306a, 306b) bedeckt,
g) Zusammenfügen der flexiblen Abdeckfolie (400) mit der Außenfläche (304) von wenigstens einem der wenigstens zwei Teile (308, 308a, 308b) und mit dem wenigstens einen Faltkanal (306a, 306b).

4. Verfahren zur Herstellung eines Verbundelements (100) nach einem der Ansprüche 1 bis 3, wobei es nach dem Schritt e) oder dem Schritt ee) einen Schritt zum Abschrägen der Außenfläche (304) der Platte (301) am und/oder in der Nähe des wenigstens einen Faltkanals (306a, 306b) umfasst.

5. Verfahren zur Herstellung eines Verbundelements (100) nach einem der Ansprüche 1 bis 4, wobei, wenn im Schritt c) die Fläche (202, 204, 206, 208), die zumindest teilweise mit einem Teil der Innenfläche (302) der Platte (301) zusammengefügt ist, weiter gekrümmt wird,
nach dem Schritt c) und vor dem Schritt d) das Verfahren den Schritt umfasst zum:
c') Biegen der Platte (301), so dass sie wenigstens teilweise mit der Fläche (202, 204, 206, 208) übereinstimmt, mit der sie zusammengefügt ist.

6. Verfahren zur Herstellung eines Verbundelements (100) nach einem der Ansprüche 1 bis 5, wobei, wenn im Schritt c) die Fläche (202, 204, 206, 208), die zumindest teilweise mit einem Teil der Innenfläche (302) der Platte (301) zusammengefügt ist, des Weiteren eine Stufe umfasst, die durch eine an eine der Kanten (210, 212, 214, 216) angrenzende Trittfläche (202b), eine Steigung (202C) und eine Ecke (202d) definiert ist,
nach dem Schritt c) und vor dem Schritt d) das Verfahren den Schritt umfasst zum:
c') Biegen der Platte (301), so dass sie näher an die Kante (210, 212, 214, 216) gebracht wird, die an die Trittfläche (202b) angrenzt, und
nach dem Schritt e) die Schritte umfasst zum:
e') Schneiden der Platte (301) an der Ecke (202d), die einen hängenden Teil (308c) und einen haftenden Teil (308d) der Platte (301) bilden, wobei der haftende Teil (308d) an dem Kern (200) haftet und der hängende Teil (308c) der Trittfläche (202b) entspricht und von letzterer beabstandet ist,
e") Falten der Platte (301) entlang des Faltkanals (306a, 306b), der der Kante (210, 212, 214, 216) neben der Lauffläche (202b) entspricht, so dass der Teil der Innenfläche (302) des hängenden Teils (308c) mit der Trittfläche (202b) zusammengefügt wird.

7. Verfahren zur Herstellung eines Verbundelements (100) nach einem der Ansprüche 1 bis 6, wobei die Platte (301) aus künstlichem Holz besteht.

8. Verfahren zur Herstellung eines Verbundelements (100) nach einem der Ansprüche 1 bis 7, wobei die Platte (301) aus MDF besteht.

9. Verfahren zur Herstellung eines Verbundelements (100) nach einem der Ansprüche 1 bis 8, wobei der Kern (200) aus natürlichem Holz besteht.

10. Verfahren zur Herstellung eines Verbundelements (100) nach einem der Ansprüche 1 bis 9, wobei der Schritt d) nach dem Schritt b) und vor dem Schritt c) ausgeführt wird.

11. Verfahren zur Herstellung eines Verbundelements (100) nach einem der Ansprüche 1 bis 10, wobei im Schritt d) wenigstens ein Faltkanal (306a, 306b) operativ ausgebildet wird, der wenigstens einer der Kanten (210, 212, 214, 216) entspricht und mit Bezug auf die letztere um einen Abstand versetzt ist, der höchstens gleich der Dicke (d) der Platte (301) ist.

12. Verbundelement (100), das umfasst:
einen Kern (200) mit einer Vielzahl von Flächen (202, 204, 206, 208), die aneinandergrenzen und durch Kanten (210, 212, 214, 216) miteinander verbunden sind,
eine Umhüllung (300), die an dem Kern (200) angeordnet ist, so dass wenigstens ein Oberflächenbereich davon bedeckt wird, der wenigstens einen Teil von wenigstens zwei Flächen (202, 204, 206, 208) umfasst, die aneinandergrenzen und durch wenigstens eine der Kanten (210, 212, 214, 216) miteinander verbunden sind,
wobei die Umhüllung (300) eine Innenfläche (302) hat, die angepasst ist, um mit dem Kern (200) und einer der Innenfläche (302) gegenüberliegende Außenfläche (304) operativ zusammengefügt zu werden, wobei die Innenfläche (302) und die Außenfläche (304) durch eine Dicke (d) voneinander beabstandet sind,
wobei die Umhüllung (300) in einem Stück ausgebildet ist und wenigstens zwei Teile (308, 308a, 308b) umfasst, die aneinandergrenzen und jeweils angepasst sind, um einen entsprechenden Teil der wenigstens zwei angrenzenden Flächen (202, 204, 206, 208) zu bedecken,
wobei die Umhüllung (300) wenigstens einen Faltkanal (306a, 306b) umfasst, der die wenigstens zwei Teile (308, 308a, 308b) definiert und sie mithilfe von einem reduzierten Teil (d1, d2) der Dicke (d) miteinander verbindet, der als Scharnier wirkt,
**dadurch gekennzeichnet, dass**
der wenigstens eine Faltkanal (306a, 306b) an der Außenfläche (304) der Umhüllung (300) in einer Position ausgebildet ist, die der wenigstens einen der Kanten (210, 212, 214, 216) des Kerns (200) operativ entspricht.

13. Verbundelement (100) nach Anspruch 12, wobei wenigstens einer der wenigstens zwei Teile (308, 308a, 308b) eine geringere Dicke mit Bezug auf die Dicke des anderen der wenigstens zwei Teile (308, 308a, 308b) hat.

14. Verbundelement (100) nach Anspruch 12 oder 13, das eine flexible Abdeckfolie (400) umfasst, die mit der Au ßenfläche (304) von wenigstens einem der wenigstens zwei Teile (308, 308a, 308b) und mit wenigstens einem Faltkanal (306a, 306b) zusammengefügt ist.

## Revendications

1. - Procédé de formation d'un élément composite (100) comprenant les étapes :
a) disposer un noyau (200) comprenant une pluralité de faces (202, 204, 206, 208) adjacentes les unes aux autres et reliées les unes aux autres par l'intermédiaire de bords (210, 212, 214, 216),
b) disposer un panneau (301) d'une seule pièce, dimensionné pour recouvrir au moins une région de surface dudit noyau (200) qui comprend au moins une partie d'au moins deux faces adjacentes (202, 204, 206, 208) reliées l'une à l'autre par l'intermédiaire d'au moins un desdits bords (210, 212, 214, 216),
ledit panneau (301) ayant une épaisseur (d), une surface intérieure (302) agencée pour être jointe de manière fonctionnelle audit noyau (200), et une surface extérieure (304) opposée à ladite surface intérieure (302),
c) coupler ledit panneau (301) audit noyau (200) de telle sorte que l'une desdites au moins deux faces (202, 204, 206, 208) est au moins partiellement jointe à une partie de ladite surface intérieure (302) dudit panneau (301),
**caractérisé par le fait que**
après ladite étape c), le procédé comprend en outre, dans l'ordre, les étapes :
d) former, sur ladite surface extérieure (304) dudit panneau (301), au moins un canal de pliage (306a, 306b) définissant et reliant l'une à l'autre au moins deux parties adjacentes (308, 308a, 308b) dudit panneau (301) au moyen d'une partie réduite (d1, d2) de ladite épaisseur (d),
ledit au moins un canal de pliage (306a, 306b) étant en outre formé pour correspondre de manière fonctionnelle audit au moins un desdits bords (210, 212, 214, 216) dudit noyau (200),
e) plier ledit panneau (301) le long dudit canal de pliage (306a, 306b) de façon à joindre la partie de la surface intérieure (302) de chacune desdites au moins deux parties (308, 308a, 308b) à celle correspondante desdites au moins deux faces adjacentes (202, 204, 206, 208) dudit noyau (200).

2. - Procédé de formation d'un élément composite (100) selon la revendication 1, dans lequel, après ladite étape e), il comprend l'étape :
ee)enlever de la matière de ladite surface extérieure (304) d'au moins une desdites au moins deux parties (308, 308a, 308b) de façon à en réduire l'épaisseur à une épaisseur réduite (d3) qui est inférieure à ladite épaisseur (d).

3. - Procédé de formation d'un élément composite (100) selon la revendication 1 ou 2, dans lequel, après ladite étape e) ou ladite étape ee), il comprend les étapes :
f) disposer un film de recouvrement souple (400) dimensionné pour recouvrir au moins une partie de ladite surface extérieure (304) d'au moins une desdites au moins deux parties (308, 308a, 308b) et ledit au moins un canal de pliage (306a, 306b),
g) joindre le film de recouvrement souple (400) à la surface extérieure (304) d'au moins une desdites au moins deux parties (308, 308a, 308b) et audit au moins un canal de pliage (306a, 306b).

4. - Procédé de formation d'un élément composite (100) selon l'une quelconque des revendications 1 à 3, dans lequel, après ladite étape e) ou ladite étape ee), il comprend une étape de chanfreinage de la surface extérieure (304) dudit panneau (301) audit et/ou près dudit au moins un canal de pliage (306a, 306b).

5. - Procédé de formation d'un élément composite (100) selon l'une quelconque des revendications 1 à 4, dans lequel, lors de ladite étape c), ladite face (202, 204, 206, 208) qui est au moins partiellement jointe à une partie de ladite surface intérieure (302) dudit panneau (301) est, en outre, incurvée,
après ladite étape c) et avant ladite étape d), ledit procédé comprend l'étape :
c') courber ledit panneau (301) de façon à le conformer au moins partiellement à ladite face (202, 204, 206, 208) à laquelle il est joint.

6. - Procédé de formation d'un élément composite (100) selon l'une quelconque des revendications 1 à 5, dans lequel, lors de ladite étape c), ladite face (202, 204, 206, 208) qui est au moins partiellement jointe à une partie de ladite surface intérieure (302) dudit panneau (301) comprend en outre une étape définie par une marche (202b) adjacente à l'un desdits bords (210, 212, 214, 216), une contremarche (202c) et un nez (202d),
après ladite étape c) et avant ladite étape d), ledit procédé comprend l'étape :
c') courber ledit panneau (301) de façon à le rapprocher dudit bord (210, 212, 214, 216) qui est adjacent à ladite marche (202b), et
après ladite étape e), il comprend les étapes :
e') couper ledit panneau (301) audit nez (202d), en formant une partie suspendue (308c) et une partie adhérente (308d) dudit panneau (301), ladite partie adhérente (308d) adhérant audit noyau (200) et ladite partie suspendue (308c) correspondant à ladite marche (202b) et étant espacée de cette dernière,
e") plier ledit panneau (301) le long dudit canal de pliage (306a, 306b) qui correspond au bord (210, 212, 214, 216) adjacent à ladite marche (202b) de façon à joindre la partie de la surface intérieure (302) de ladite partie suspendue (308c) à ladite marche (202b).

7. - Procédé de formation d'un élément composite (100) selon l'une quelconque des revendications 1 à 6, dans lequel ledit panneau (301) est réalisé avec du bois artificiel.

8. - Procédé de formation d'un élément composite (100) selon l'une quelconque des revendications 1 à 7, dans lequel ledit panneau (301) est réalisé avec du panneau de fibres à densité moyenne.

9. - Procédé de formation d'un élément composite (100) selon l'une quelconque des revendications 1 à 8, dans lequel ledit noyau (200) est réalisé avec du bois naturel.

10. - Procédé de formation d'un élément composite (100) selon l'une quelconque des revendications 1 à 9, dans lequel ladite étape d) est mise en oeuvre après ladite étape b) et avant ladite étape c).

11. - Procédé de formation d'un élément composite (100) selon l'une quelconque des revendications 1 à 10, dans lequel, dans ladite étape d), ledit au moins un canal de pliage (306a, 306b) est formé en correspondant de manière fonctionnelle audit au moins un desdits bords (210, 212, 214, 216) et décalé par rapport à ce dernier d'une distance qui est au plus égale à l'épaisseur (d) dudit panneau (301).

12. - Élément composite (100) comprenant :
un noyau (200) comprenant une pluralité de faces (202, 204, 206, 208) adjacentes les unes aux autres et reliées les unes aux autres par l'intermédiaire de bords (210, 212, 214, 216),
une enveloppe (300) disposée sur ledit noyau (200) pour recouvrir au moins une région de surface de celui-ci qui comprend au moins une partie d'au moins deux faces (202, 204, 206, 208) adjacentes et reliées l'une à l'autre par l'intermédiaire d'au moins un desdits bords (210, 212, 214, 216),
ladite enveloppe (300) ayant une surface intérieure (302) agencée pour être jointe de manière fonctionnelle audit noyau (200) et une surface extérieure (304) opposée à ladite surface intérieure (302), ladite surface intérieure (302) et ladite surface extérieure (304) étant espacées l'une de l'autre d'une épaisseur (d),
ladite enveloppe (300) étant formée d'une seule pièce et comprenant au moins deux parties (308, 308a, 308b) adjacentes l'une à l'autre et agencées chacune pour recouvrir une partie correspondante desdites au moins deux faces adjacentes (202, 204, 206, 208),
ladite enveloppe (300) comprenant au moins un canal de pliage (306a, 306b) définissant et reliant lesdites au moins deux parties (308, 308a, 308b) l'une à l'autre au moyen d'une partie réduite (d1, d2) de ladite épaisseur (d) qui sert de charnière,
**caractérisé par le fait que**
ledit au moins un canal de pliage (306a, 306b) est formé sur ladite surface extérieure (304) de ladite enveloppe (300) dans une position correspondant de manière fonctionnelle audit au moins un desdits bords (210, 212, 214, 216) dudit noyau (200).

13. - Elément composite (100) selon la revendication 12, dans lequel au moins une desdites au moins deux parties (308, 308a, 308b) a une épaisseur inférieure à l'épaisseur de l'autre desdites au moins deux parties (308, 308a, 308b)

14. - Élément composite (100) selon la revendication 12 ou 13, comprenant un film de recouvrement souple (400) joint à la surface extérieure (304) d'au moins une desdites au moins deux parties (308, 308a, 308b) et audit au moins un canal de pliage (306a, 306b).
